# EUROPÄISCHE PATENTSCHRIFT

(11) **EP 0 479 981 B1**
(45) Veröffentlichungstag und Bekanntmachung des Hinweises auf die Patenterteilung: **29.06.1994**
(21) Anmeldenummer: 91907496.3
(22) Anmeldetag: 16.04.1991
(51) Int. Cl.: A62B 17/00, B64D 10/00

(54) **FLIEGERHOSE**
FLIGHT-SUIT TROUSERS
PANTALON DE PILOTE

(30) Priorität: 20.04.1990 DE 4012594
(43) Veröffentlichungstag der Anmeldung: 15.04.1992
(73) Patentinhaber: Autoflug GmbH & Co, D-25462 Rellingen (DE)
(72) Erfinder: MORITZEN, Werner, D-2200 Elmshorn (DE)
(74) Vertreter: Müller, Karl-Ernst, Dr., Dipl.-Ing.
(86) Internationale Anmeldenummer: DE9100316
(87) Internationale Veröffentlichungsnummer: WO9116106

(56) Entgegenhaltungen:
- US-A- 2 397 710
- US-A- 3 099 261
- US-A- 4 674 479

## Beschreibung

Die Erfindung betrifft eine Fliegerhose mit einer in die Hose integrierten aufblasbaren Blase, deren Beinteile über einen vom Oberschenkelbereich zum Unterschenkelbereich längsverlaufenden Reißverschluß öffen- und schließbar sind.

Eine derartige Hose ist aus der US-A- 4 674 479 bekannt. Gattungsgemäße Fliegerhosen weisen eine aufblasbare Blase auf, die über einen Schlauchanschluß mit einer Druckluftversorgung verbunden ist, so daß für den Fall, daß der Träger der Fliegerhose als Pilot eines Flugzeuges hohen Beschleunigungswerten ausgesetzt ist, die zu einer Verdrängung des Blutes aus dem Gehirn in die Extremitäten führen, durch das Aufblasen der Blase ein auf die Extremitäten wirkender Gegendruck aufgebaut ist. Da die Fliegerhose über der normalen Bekleidung des Piloten getragen wird, sind insbesondere die Beinteile der Fliegerhose über längslaufende Reißverschlüsse öffen- und schließbar, so daß die Fliegerhose beim Anlegen um die Beine herum gelegt und durch Schließen des Reißverschlusses in ihre Form gebracht wird.

Bei gattungsgemäßen Fliegerhosen ist zum Schließen der Beinteile ein über den Ober- und den Unterschenkelbereich einteiliger durchgehender Reißverschluß vorgesehen, dessen Schieber zum Schließen des Reißverschlusses von oben nach unten auf den Fußbereich zu zu verschieben ist; diese Schließrichtung des Schiebers ist vorgegeben, damit bei den hohen einwirkenden Beschleunigungskräften auch der Schieber in die Schließrichtung belastet ist und sich nicht selbsttätig öffnet.

Mit derartigen einteiligen Reißverschlüssen ist der Nachteil verbunden, daß im Kniebereich zwischen Oberschenkel und Unterschenkel die Reißverschlüsse vornehmlich schon durch die normale Gehbewegung des Piloten geknickt werden; aufgrund dieser Wechselbelastung können Beschädigungen am Reißverschluß entstehen, die bei Beanspruchung des Reißverschlusses durch das Aufblasen der Innenblase der Fliegerhose zum Öffnen des Reißverschlusses führen können, weil in aufgeblasenem Zustand der Fliegerhose eine erhebliche Belastung auf die Reißverschlüsse der Beinteile wirkt. Geben diese Reißverschlüsse bei aufgeblasener Fliegerhose der Belastung nach, so kann es dadurch zu einem unvorhersehbaren Druckabfall in der Fliegerhose kommen, welche die Hose außer Funktion setzt, so daß der zu verhindernde Blutabfluß aus dem Gehirn des Trägers doch eintreten kann.

Der Erfindung liegt daher die Aufgabe zugrunde, eine gattungsgemäße Fliegerhose derart zu verbessern, daß einer unverträglichen Beanspruchung der Reißverschlüsse zum Schließen der Beinkleider entgegengetreten ist.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht vor, daß die Beinteile zwei getrennte Reißverschlüsse für den Oberschenkelbereich und den Unterschenkelbereich der Fliegerhose mit zur Schließbewegung jeweils auf den Fußbereich zu verschiebbaren Schiebern aufweisen, wobei die getrennten Reißverschlüsse unter Einschluß eines Stoßbereiches im Beugebereich des Beins am Knie des Trägers angeordnet sind. Durch die Anordnung von zwei getrennten Reißverschlüssen unter Überbrückung der hoch beanspruchten Knickstelle im Kniebereich des Trägers der Fliegerhose sind die getrennten Reißverschlüsse keiner auf sie wirkenden Wechselbeanspruchung mehr unterworfen, so daß die Schließsicherheit der Reißverschlüsse verbessert ist. Mit der Anordnung von zwei getrennten Reißverschlüssen kann insbesondere der Forderung Rechnung getragen werden, daß die Schieber beider Reißverschlüsse jeweils von oben nach unten, also vom Hüftbereich zum Fußbereich der Hose zur Schließbewegung des Reißverschlusses verschiebbar sein sollen.

Nach einem bevorzugten Ausführungsbeispiel der Erfindung ist zur Verstärkung des Stoßbereiches zwischen den beiden Reißverschlüssen ein den Abstand der Reißverschlüsse zueinander überbrückender textiler Verstärkungsstreifen vorgesehen, der mit den überstehenden Enden der Webbänder der beiden Reißverschlüsse sowie mit dem Beinteil vernäht ist. Hierzu ist der Verstärkungsstreifen zweckmäßig U-förmig umgeschlagen und nimmt das jeweilige Ende des Webbandes der beiden Reißverschlüsse zwischen seine U-Schenkel auf und ist anschließend durch eine durch die U-Schenkel einschließlich der Enden der Webbänder der Reißverschlüsse geführte Naht mit dem Beinteil vernäht. Eine zweckmäßige Ausführungsform sieht dabei vor, daß der Verstärkungsstreifen doppellagig U-förmig umgeschlagen ist, so daß sich eine vierlagige Verstärkung des Stoßbereiches ergibt. Dabei ist der Verstärkungsstreifen mit seiner Gewebekette zweckmäßig in Zugrichtung der Reißverschlüsse verlaufend anzuordnen.

Um das Einfädeln des Schiebers auf den oberen, dem Kniebereich zugeordneten Anfang des für den Unterschenkel vorgesehenen Reißverschlusses zu erleichtern, ist das auf den für den Unterschenkel eingerichteten Reißverschluß zulaufende Ende des Webbandes des oberen Reißverschlusses unter Freigabe des Anfangsbereichs der Verzahnung dieses Reißverschlusses abgeschrägt, so daß bei dem Einfädeln und der Bewegung des Schiebers in diesem Anfangsbereich des für den Unterschenkel vorgesehenen Reißverschlusses nur das Ende des herkömmlichen Webbandes des Reißverschlusses erfaßt wird. Hierzu wird das auslaufende Ende des Webbandes des oberen Reißverschlusses schräg untergelegt und vom Verstärkungsstreifen erfaßt. Hiermit ist vermieden, daß bei der diesbezüglichen Bewegung des Schiebers Teile des Webbandes des oberen Reißverschlusses beziehungsweise des Verstarkungsbandes ergriffen werden, so daß davon gelöste Fasern oder Abrieb in den Einfädelbereich des Unterschenkel-Reißverschlusses gelangen könnten.

Es kann auch vorgesehen sein, die getrennten Zähne der beiden Reißverschlüsse für den Oberschenkel und den Unterschenkel der beiden Teile an einem durchgehenden und mit dem Beinteil zu vernähenden Webband anzuordnen, wobei im Kniebereich eine Zahnlücke freigelassen und dort entsprechende Maßnahmen zum Einfädeln des Schiebers für den Unterschenkel-Reißverschluß beziehungsweise ein Bahnhof für den Schieber des Oberschenkel-Reißverschlusses vorgesehen sind.

In der Zeichnung ist ein Ausführungsbeispiel der Erfindung wiedergegeben, welches nachstehend beschrieben ist. Es zeigen:
- Fig. 1: eine Fliegerhose in schaubildlicher Darstellung,
- Fig. 2: in einer vergrößerten Darstellung den Kniebereich eines Beinteiles der Fliegerhose,
- Fig. 3: den Stoßbereich zwischen den getrennten Reißverschlüssen in einer schematischen Aufsicht,
- Fig. 4: einen vereinfachten Schnitt durch die Vernähung des Reißverschlusses im Stoßbereich.

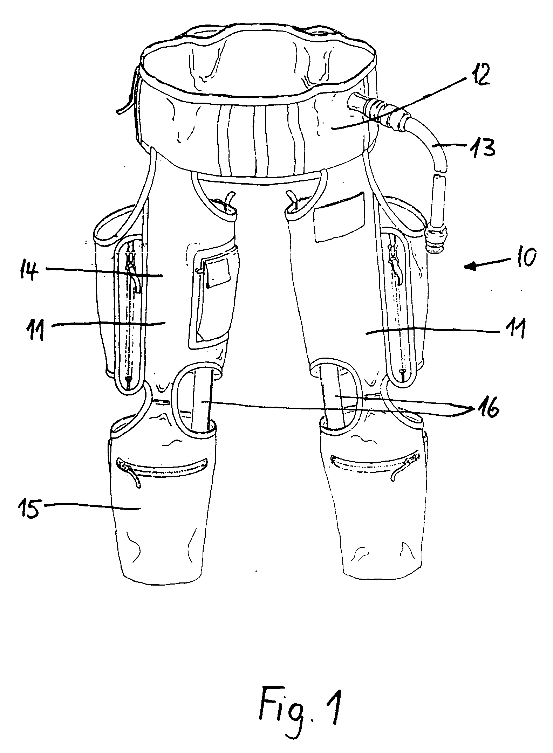

Eine Fliegerhose 10 hat zwei Beinteile 11 und einen Hüftbereich 12, an dem sich ein Anschluß 13 an ein Druckluftsystem befindet, über den die nicht weiter dargestellte, in die Hose 10 integrierte Blase mit Druckluft gefüllt werden kann. Die Beinteile 11 sind jeweils über in Längsrichtung über den Oberschenkelbereich 14 und den Unterschenkelbereich 15 verlaufende Reißverschlüsse öffen- und schießbar, wobei die Reißverschlüsse in der Darstellung der Figur 1 unter einer Abdeckleiste 16 angeordnet sind.

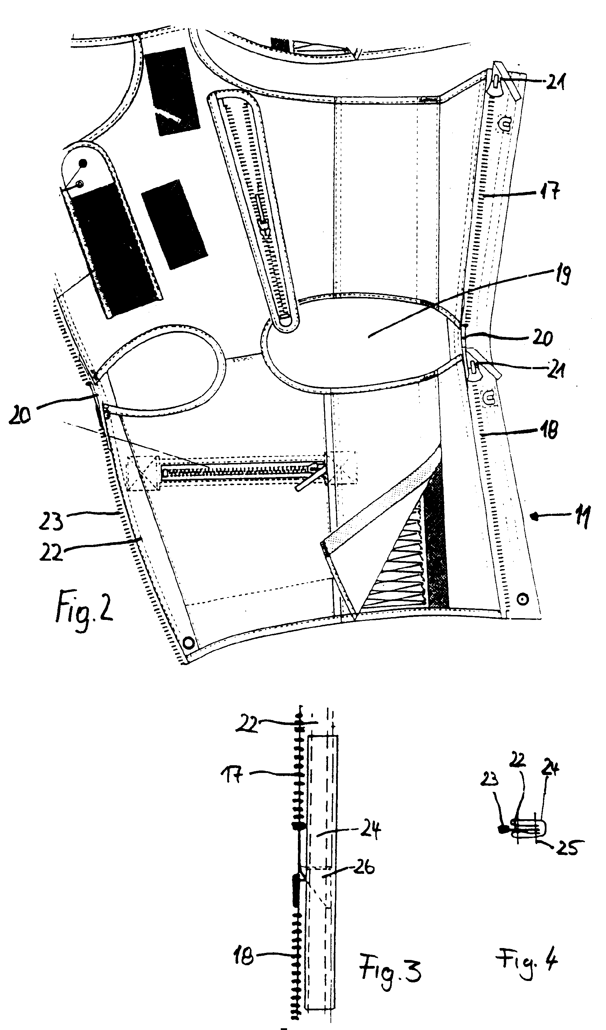

Aus Figur 2 ergibt sich die Anordnung von zwei getrennten Reißverschlüssen, nämlich eines Reißverschlusses 17 für den Oberschenkelbereich 14 und eines Reißverschlusses 15 für den Unterschenkelbereich 18. Die Figur 2 zeigt ein Beinteil 11 im Kniebereich in aufgeklappter Darstellung, also bei nicht angelegter Hose, wobei in dem Kniebereich Dehnungsbereiche 19 in die Beinteile 11 eingearbeitet sind.

In dem beanspruchten Kniebereich sind die Reißverschlüsse 17, 18 nicht unmittelbar aneinanderstoßend angeordnet, sondern dazwischen befindet sich ein Stoßbereich 20, der den Abstand zwischen dem Einfädelende für den Unterschenkel-Reißverschluß 18 und dem Bahnhof für den Oberschenkel-Reißverschluß 17 überbrückt. Wie sich aus der Darstellung im einzelnen ergibt, sind die zugehörigen Schieber 21 der Reißverschlüsse 17, 18 jeweils am dem Fußbereich entfernten Ende der Reißverschlüsse 17, 18 angeordnet, so daß sie zum Schließen der Reißverschlüsse auf den Fußbereich zu verschoben werden müssen. Aus der Figur ergeben sich ferner die Webbänder 22 der Reißverschlüsse 17, 18 als Träger der Zähne 23.

Nach Figur 3 ist zur Überbrückung des Stoßbereiches 20 und zu dessen Verstärkung ein Verstärkungsstreifen 24 angeordnet, der die Enden der Webbänder 22 der beiden Reißverschlüsse 17, 18 erfaßt. Die Art der Vernähung ergibt sich im einzelnen aus Figur 4, wonach der Verstärkungsstreifen doppellagig U-förmig eingeschlagen ist und das jeweilige Webband 22 der Reißverschlüsse 17, 18 zwischen sich aufnimmt. Die Vernähung erfolgt mittels den Verstärkungsstreifen durchstechender Nähte 25. Damit beim Einfädeln des Schiebers 21 des Unterschenkel-Reißverschlusses 18 nicht Abrieb oder sich lösende Textilteilchen in die Zähne 23 geraten können, ist das diesbezügliche Ende des Webbandes 22 des oberen Reißverschlusses 17 mit einer Abschrägung 26 versehen.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Fliegerhose (10) mit einer in die Hose (10) integrierten aufblasbaren Blase, deren Beinteile (11) über einen vom Oberschenkelbereich (14) zum Unterschenkelbereich (15) längsverlaufenden Reißverschluß (17, 18) öffen- und schließbar sind, dadurch gekennzeichnet, daß die Beinteile (11) zwei getrennte Reißverschlüsse (17, 18) für den Oberschenkelbereich (14) und Unterschenkelbereich (15) die Fliegerhose (10) mit zur Schließbewegung jeweils zum Fußbereich zu führenden Schiebern (21) aufweisen, wobei im Beugebereich des Beins am Knie des Trägers die getrennten Reißverschlüsse (17, 18) unter Einschluß eines Stoßbereiches (20) angeordnet sind.

2. Fliegerhose nach Anspruch 1, dadurch gekennzeichnet, daß zur Verstärkung des Stoßbereiches (20) ein den Abstand der Reißverschlüsse (17, 18) zueinander überbrückender textiler Verstärkungsstreifen (24) mit den überstehenden Enden der Webbänder (22) der Reißverschlüsse (17, 18) und mit dem Beinteil (11) vernäht ist.

3. Fliegerhose nach Anspruch 2, dadurch gekennzeichnet, daß der Verstärkungsstreifen (24) U-förmig umgeschlagen und das jeweilige Ende des Webbandes (22) des zugeordneten Reißverschlusses (17, 18) zwischen seine U-Schenkel aufnehmend angeordnet und mit einer durch die U-Schenkel geführten Naht (25) mit dem Beinteil (11) vernäht ist.

4. Fliegerhose nach Anspruch 3, dadurch gekennzeichnet, daß der Verstärkungsstreifen (24) in doppelter Lage U-förmig umgeschlagen ist, so daß sich eine vierfache Verstärkung der Nahtstelle für das Webband (22) der Reißverschlüsse (17, 18) ergibt.

5. Fliegerhose nach einem der Ansprüche 2 bis 4, dadurch gekennzeichnet, daß der textile Verstärkungestreifen (24) mit seiner Gewebekette in Zugrichtung der Reißverschlüsse (17, 18) verlaufend angeordnet ist.

6. Fliegerhose nach einem der Ansprüche 2 bis 5, dadurch gekennzeichnet, daß das auf den für den Unterschenkelbereich (15) eingerichteten Reißverschluß (18) zulaufende Ende des Webbandes (22) des oberen Reißverschlusses (17) unter Freigabe der Zähne (23) des Reißverschlusses (18) abgeschrägt ist.

7. Fliegerhose nach einem der Ansprüche 1 bis 6, dadurch gekennzeichnet, daß die Zähne (23) der getrennten Reißverschlüsse (17, 18) an einem durchgehenden Webband (22) unter Bildung einer Zahnlücke im Stoßbereich (20) angeordnet sind, und daß an den Enden des Stoßbereiches (20) ein Bahnhof und eine Einfädelungsstrecke für die zugeordneten Reißverschlüsse (17, 18) an dem Webband (22) vorgesehen sind.

## Claims

1. Pilot's trousers (10) having an inflatable bladder integrated into the trousers (10), the leg portions (11) of which can be opened and closed by way of a zip-fastener (17, 18) extending longitudinally from the thigh region (14) to the lower leg region (15), characterised in that the leg portions (11) have two separate zip-fasteners (17, 18) for the thigh region (14) and the lower leg region (15) of the pilot's trousers (10) with sliders (21) each of which can be guided to the foot region for the purposes of the closing movement, with the separate zip-fasteners (17, 18) being arranged with inclusion of an impact region (20) in the bending region of the leg at the knee of the wearer.

2. Pilot's trousers according to claim 1, characterised in that for the purpose of reinforcing the impact region (20) a textile reinforcement strip (24) bridging the space between the zip-fasteners (17, 18) is sewn together with the protruding ends of the tapes (22) of the zip-fasteners (17, 18) and with the leg portion (11).

3. Pilot's trousers according to claim 2, characterised in that the reinforcing strip (24) is turned over in a U-shaped manner and is arranged so as to receive the respective end of the tape (22) of the associated zip-fastener (17, 18) between the legs of its U-shaped arrangement and is sewn together with the leg portion (11) with a seam (25) which is guided through the legs of the U-shaped arrangement.

4. Pilot's trousers according to claim 3, characterised in that the reinforcement strip (24) is turned over in a double layer in a U-shaped manner so that a fourfold reinforcement of the seam for the tape (22) of the zip-fasteners (17, 18) results.

5. Pilot's trousers according to one of the claims 2 to 4, characterised in that the textile reinforcement strip (24) is arranged with the warp of its woven fabric extending in the direction of pull of the zip-fasteners (17, 18).

6. Pilot's trousers according to one of the claims 2 to 5, characterised in that the end of the tape (22) of the upper zip-fastener (17) running towards the zip-fastener (18) which is fitted for the lower leg region (15) is made to slant with release of the teeth (23) of the zip-fastener (18).

7. Pilot's trousers according to one of the claims 1 to 6, characterised in that the teeth (23) of the separate zip-fasteners (17, 18) are arranged on a continuous tape (22) with formation of a tooth space in the impact region (20) and in that a stop and a threading section for the associated zip-fasteners (17, 18) are provided on the tape (22) at the ends of the impact region (20).

## Revendications

1. Pantalon d'aviateur (10) avec un soufflet gonflable, intégré dans le pantalon (10), dont les parties jambes (11) sont susceptibles d'être ouvertes et fermées au moyen d'une fermeture à glissière (17, 18) s'étendant longitudinalement de la zone de cuisse (14) à la zone de jambe (15), caractérisé en ce que les parties jambes (11) présentent deux fermetures à glissière (17,18) destinées à la zone de cuisse (14) et à la zone de jambe (15) du pantalon d'aviateur (10), avec des curseurs (21) à déplacer chacun vers la zone de pied pour obtenir le mouvement de fermeture, les fermetures à glissière (17, 18) séparées, étant disposées dans la zone de flexion de la jambe au genou du porteur, en ménageant entre elles une zone de jonction (20).

2. Pantalon d'aviateur selon la revendication 1, caractérisé en ce que, pour renforcer la zone de jonction (20), une bande de renforcement (24) textile, recouvrant la distance subsistant entre les fermetures à glissière (17, 18), est cousue aux extrémités dépassantes des rubans tissés (22) des fermetures à glissière (17, 18), et est cousue à la partie jambe (11).

3. Pantalon d'aviateur selon la revendication 1, caractérisé en ce que la bande de renforcement (24) est rabattue en U et l'extrémité respective de la bande tissée (22) de la fermeture à glissière (17, 18) associée est disposée entre ses branches de U, qui la reçoivent, et est cousue à la partie jambe (11), à l'aide d'une couture (25) réalisée dans les branches de U.

4. Pantalon d'aviateur selon la revendication 3, caractérisé en ce que la bande de renforcement (24) est rabattue en U pour constituer une couche double, de sorte qu'en résulte un renforcement quadruple du point de couture pour la bande tissée (22) des fermetures à glissière (17, 18).

5. Pantalon d'aviateur selon l'une des revendications 2 à 4, caractérisé en ce que la bande de renforcement textile (24) est disposée avec sa chaîne de tissage orientée dans la direction de la traction des fermetures à glissière (17, 18).

6. Pantalon d'aviateur selon l'une des revendications 2 à 5, caractérisé en ce que l'extrémité, orientée vers la fermeture à glissière (18) prévue pour la zone de jambe (15) de la bande tissée (22) de la fermeture à glissière (17) supérieure est biseautée en dégageant les dents (23) de la fermeture à glissière (18).

7. Pantalon d'aviateur selon l'une des revendications 1 à 6, caractérisé en ce que les dents (23) des fermetures à glissière (17, 18) séparées sont disposées sur une bande tissée (22) continue, en formant un entre-dents dans la zone de jonction (20), et en ce qu'aux extrémités de la zone de jonction (20) sont prévus, sur la bande tissée (22), un point d'arrêt et un tronçon d'enfilage pour les fermetures à glissière (17, 18) associées.
